# EUROPÄISCHE PATENTSCHRIFT

(11) **EP 2 161 423 B1**
(45) Veröffentlichungstag und Bekanntmachung des Hinweises auf die Patenterteilung: **27.04.2011**
(21) Anmeldenummer: 09177538.7
(22) Anmeldetag: 12.09.2007
(51) Int. Cl.: F01N 3/20, F01N 3/029, F01N 1/08

(54) **Abgasanlage für Dieselfahrzeuge mit einem SCR-Katalysator**
Exhaust gas facility for diesel vehicles with an SCR catalytic converter
Installation de gaz d'échappement pour véhicules diesel dotés d'un catalyseur SCR

(30) Priorität: 26.09.2006 DE 102006045435
(43) Veröffentlichungstag der Anmeldung: 10.03.2010
(62) Teilanmeldung aus: 07017808.2
(73) Patentinhaber: Faurecia Abgastechnik GmbH, 90765 Fürth (DE); AUDI AG, 85045 Ingolstadt (DE)
(72) Erfinder: Amon, Bernd, Dr., 96047 Bamberg (DE); Albrecht, Herbert, 91056 Erlangen (DE); Reif, Peter, 91056 Erlangen (DE); Perrot, Yohann, Dr., 76890 Belleville-en-Caux (FR); Londos, Stéphane, 69380 Les Chères (FR); Peter, Werner, 85101 Lenting (DE)
(74) Vertreter: Mörtel & Höfner

(56) Entgegenhaltungen:
- EP-A- 1 023 935
- DE-A1- 4 203 807
- FR-A- 2 892 449

## Beschreibung

Die Erfindung betrifft eine Abgasanlage für Dieselfahrzeuge mit einem SCR-Katalysator gemäß dem Oberbegriff des Anspruchs 1, wie z.B. in der EP 1023935 gezeigt.

Ein SCR-Katalysator dient dazu, im Abgas vorhandene Stickoxide zu Stickstoff zu reduzieren. Dazu wird an einer stromaufwärts gelegenen Stelle der Abgasanlage, wie beispielsweise in DE 38 21 832 C1 offenbart, ein Reduktionsmittel zudosiert. Als Reduktionsmittel wird überwiegend Harnstoff eingesetzt, der in Form einer wässrigen Lösung mit Hilfe einer Injektionseinrichtung dem Abgasstrom zudosiert wird.

Oft sind Abgasanlagen in einem sich an einen Motor anschließenden Bereich zweiflutig ausgestaltet, d.h. sie weisen zwei Parallelstränge auf. Eine solche Ausgestaltung ist etwa im Falle von großvolumigen Motoren mit entsprechend großer Abgasmenge erforderlich. Im Falle einer einflutigen Ausführung der Abgasanlage müssten Abgasbehandlungsseinrichtungen wie Abgaskonverter und Dieselpartikelfilter entsprechend großvolumig ausgebildet sein und könnten aus Platzgründen nicht an der Bodengruppe eines Fahrzeugs untergebracht werden. Deshalb ist der sich vom Motor weg erstreckende Abgasstrang zunächst in zwei Parallelstränge aufgeteilt, wobei Abgasbehandlungseinrichtungen doppelt vorhanden, also in jedem Parallelstrang vorhanden sind. So umfasst etwa jeder Parallelstrang zunächst einen Abgaskonverter, dem ein Dieselpartikelfilter nachgeschaltet ist. Eine Zusammenführung der beiden Parallelstränge zu einem gemeinsamen Strang erfolgt vor dem SCR-Katalysator. In der Regel ist in dem sich vor dem SCR-Katalysator befindlichen Bereich der Bodenbaugruppe eines Fahrzeuges der Getriebeblock angeordnet, so dass eine Zusammenführung der beiden Parallelstränge erst kurz vor dem SCR-Katalysator erfolgen kann. Eine Injektion von Reduktionsmittel unmittelbar an der Vereinigungsstelle der beiden Parallelstränge hätte zur Folge, dass aufgrund der nur sehr kurzen Wegstrecke, die das Abgas durchströmen muss, bevor es den SCR-Katalysator erreicht, keine ausreichende Durchmischung des Abgases mit dem Reduktionsmittel erzielt werden könnte. Der SCR-Katalysator würde dann teilweise von Abgas durchströmt, das keinen oder einen zu geringen Anteil an Reduktionsmittel aufweist und infolgedessen unbehandelt bliebe.

Bei einer aus DE 10 2006 015 964 A1 bekannten Abgasanlage ist nur an einem Parallelstrang, der im folgenden mit erster Parallelstrang bezeichnet wird, eine Injektionseinrichtung für das Reduktionsmittel vorgesehen und dem SCR-Katalysator eine Mischeinrichtung vorgeschaltet, in die beide Parallelstränge münden, und in der eine Vermischung des mit Reduktionsmittel versetzten Abgasstroms des ersten Parallelstrangs mit dem reduktionsmittelfreien Abgasstrom des anderen Parallelstrangs, des zweiten Parallelstrangs, erfolgt. Durch diese Ausgestaltung ist gewährleistet, dass die Zudosierung des Reduktionsmittels mit ausreichendem Abstand vor dem SCR-Katalysator vorgenommen werden kann, so dass auf dem Weg bis zum Katalysator gegebenenfalls unter Mitwirkung von im Abgasstrang vorhandenen Mischeinrichtungen eine Durchmischung des Abgases mit dem Reduktionsmittels erfolgen kann. Der Aufwand für die Herstellung und die Montage einer zweiten Injektionseinrichtung an der Abgasanlage ist nun erfindungsgemäß nicht erforderlich. Die Durchmischung des reduktionsmittelfreien Abgasstroms mit dem Reduktionsmittel beinhaltenden Abgasstrom erfolgt in einer dem SCR-Katalysator vorgeschalteten Mischeinrichtung. Eine derartige Mischeinrichtung lässt sich beispielsweise in Form von konstruktiv einfachen und kostengünstig herstellbaren Blechbauteilen verwirklichen, so dass der dafür erforderliche herstellungs- und montagetechnische Aufwand geringer ist als jener für eine zweite Injektionseinrichtung im zweiten Parallelstrang. Die Mischvorrichtung der bekannten Abgasanlage umfasst ein Verbindungselement, in welches ein erstes Abgasrohr axial und ein zweites Abgasrohr seitlich einmündet.

Aufgabe der Erfindung ist es, eine Abgasanlage mit einer alternativ gestalteten Mischvorrichtung vorzuschlagen, welche insbesondere eine effektive Durchmischung der zusammengeführten Abgasströme gewährleistet.

Diese Aufgabe wird nach Anspruch 1 durch eine Mischvorrichtung gelöst, welche ein dem SCR-Katalysator vorgeschaltetes Gehäuse umfasst, wobei beide Parallelstränge derart in das Gehäuse münden, dass die jeweiligen Abgasströme im Wesentlichen tangential in das Gehäuse eingetragen werden, dass also die Abgasströme eine im Wesentlichen tangential zur Mittellängsachse des SCR-Katalysators verlaufende Strömungsrichtung aufweisen. Durch die tangentiale Anströmung des beispielsweise runden oder ovalen Gehäuses werden die Abgasströme in Umfangsrichtung des Gehäuses in Rotation versetzt und dabei durchmischt. Nicht nur aus Gründen des an der Bodengruppe vorhandenen Einbauraums ist es vorteilhaft, wenn die Parallelstränge an sich etwa diametral gegenüberliegenden Stellen des Gehäuses in dieses münden. Dabei treffen dem Zentrum des Gehäuses naheliegende Bereiche der Abgasströme aufeinander, wodurch es zu einer Verwirbelung und Durchmischung mit dem Reduktionsmittel kommt. Bei einer besonders bevorzugten Variante wird diese Durchmischung noch dadurch verbessert, dass das Gehäuse zwischen dem Mündungsbereich der Parallelstränge und dem SCR-Katalysator eine Verengung aufweist, deren Querschnittsfläche kleiner ist als die mit Abgas beaufschlagte Stirnfläche des SCR-Katalysators. Wenn der vor der Engstelle angeordnete Wandbereich des Gehäuses konusförmig, also in Form eines Trichters ausgebildet ist, wird die Durchmischung des Abgases mit Reduktionsmittel noch weiter optimiert. Die Abgasströme werden nämlich in dem Trichter aufgrund dessen zum SCR-Katalysator hin abnehmenden Querschnittsfläche beschleunigt und dadurch die Durchmischung verbessert.

Die Erfindung wird nun unter Bezugnahme auf die beigefügten Zeichnungen näher erläutert. Es zeigen:
- Fig. 1: einen Ausschnitt aus einer erfindungsgemäße Abgaslage in schematischer perspektivischer Darstellung,
- Fig. 2: eine Draufsicht auf den Ausschnitt A von Fig. 1,
- Fig. 3: einen Querschnitt entsprechend Linie III-III in Fig. 2

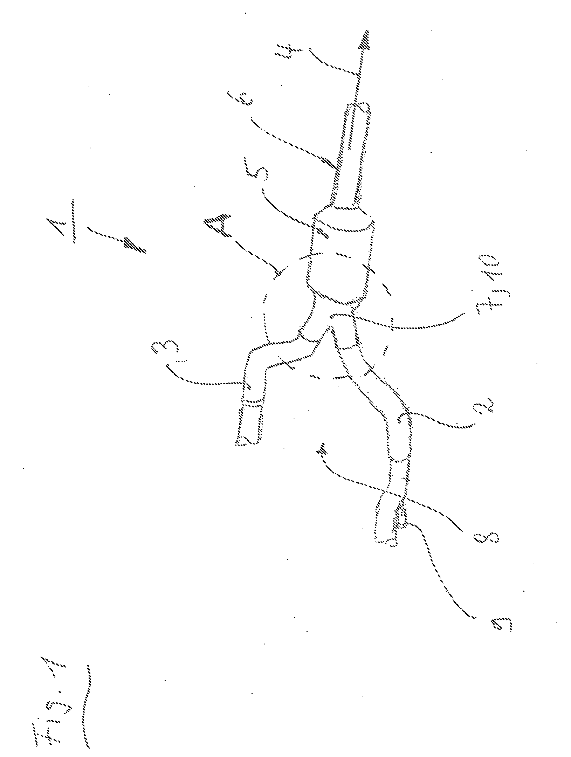

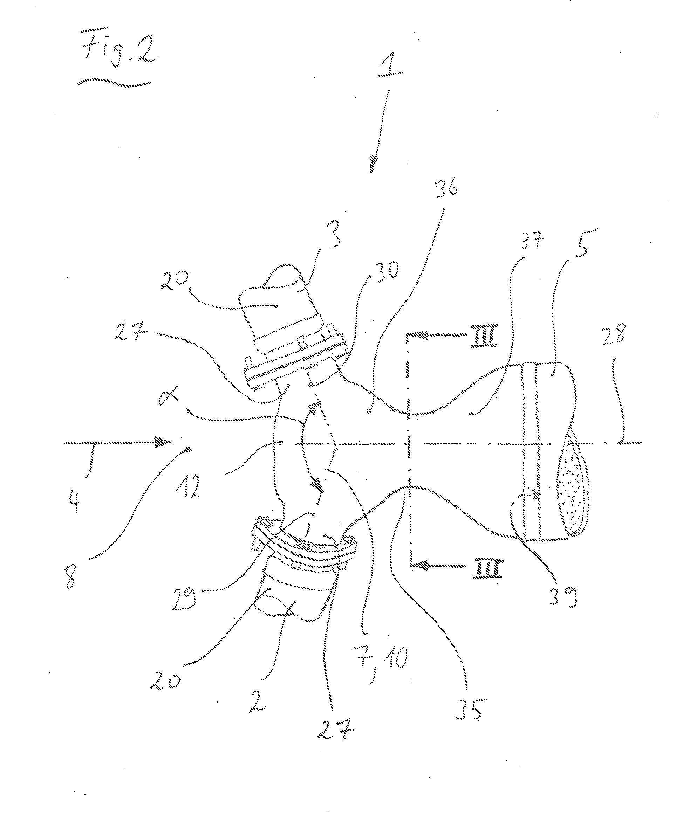

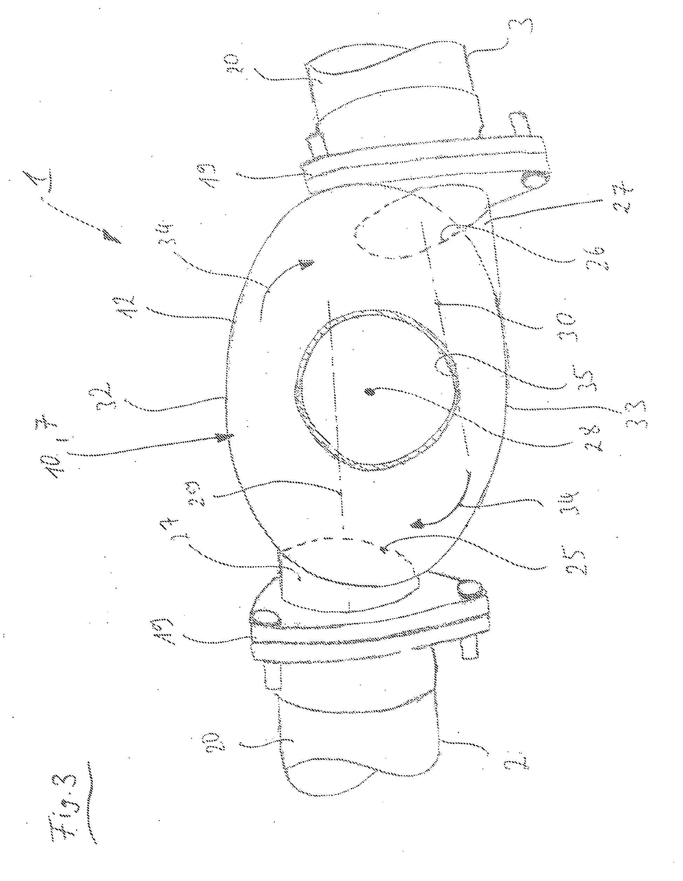

Die in Fig.1 schematisch gezeigte Abgasanlage 1 ist zweiflutig aufgebaut, d.h. sie umfasst einen ersten und einen zweiten Parallelstrang 2, 3 deren gegen die Hauptströmungsrichtung 4 des Abgases weisende Enden vor einem SCR-Katalysator 5 unter Bildung eines einzigen Abgasstranges 6 zusammengeführt sind. Die Verbindungsstelle 7 der beiden Rohrenden befindet sich, beispielsweise aus Platzgründen, etwa weil in dem mit dem Bezugszeichen 8 gekennzeichneten Bereich sich der Getriebeblock des Fahrzeugs (nicht gezeigt) befindet, unmittelbar vor dem SCR-Katalysator 5. An einer stromaufwärts der Verbindungsstelle 7 liegenden Position ist am ersten Parallelstrang 2 eine Injektionseinrichtung 9 vorgesehen, mit der ein Reduktionsmittel (wässrige Harnstofflösung) in das den ersten Parallelstrang 2 durchströmende Abgas dosierbar ist. Der Abstand zur Verbindungsstelle 7 ist so gewählt, dass sich dort das injizierte Reduktionsmittel schon weitgehend mit dem Abgas homogen vermischt hat, wobei gegebenenfalls in dem ersten Parallelstrang 2 Einbauten (nicht gezeigt) vorgesehen sein können, die eine Durchmischung fördern. Am zweiten Parallelstrang 3 findet eine Reduktionsmitteldosierung nicht statt, so dass dementsprechend dort keine Injektionseinrichtung vorhanden ist. Im Bereich der Verbindungsstelle 7 treffen somit ein mit Reduktionsmittel beladener und ein reduktionsmittelfreier Abgasstrom aufeinander. Ohne weitere Maßnahmen zur Durchmischung der Abgasströme würde nur eine Hälfte, nämlich die dem ersten Parallelstrang 2 zugeordnete Hälfte des SCR-Katalysators, arbeiten, d.h. es würde im Wesentlichen nur dort eine Stickstoffreduktion katalysiert werden. Um dies zu vermeiden ist im Bereich der Verbindungsstelle 7 eine Mischvorrichtung 10 vorhanden, die in Fig. 2 und 3 im Detail dargestellt ist. Die Verbindungsstelle 7 ist ein Gehäuse 12, welches stirnseitig an den SCR-Katalysator 5 angesetzt ist.

Die Mischvorrichtung 10 umfasst ein Gehäuse 12, mit dessen Innenraum die beiden Parallelstränge 2 und 3 jeweils über eine Zuströmöffnung 25, 26 verbunden sind. Die Abgasrohre 20 der Parallelstränge 2,3 sind über Flanschverbindungen 19 mit Anschlussstutzen 27 des Gehäuses 12 verbunden. Die Anschlussstutzen 27 bzw. die Zuströmöffnungen 25,26 befinden sich in Bezug auf die Mittellängsachse 28 des SCR-Katalysators 5 etwa an diametral gegenüberliegenden Positionen des Gehäuses 12b. Außerdem sind die Anschlussstutzen 27 so angeordnet, dass ihre Mittellängsachsen 29, 30 bzw. die sie verlassenden Abgasströme im Wesentlichen tangential in das Gehäuse 12b eingetragen werden. Die Anschlussstutzen 27 sind dabei so angeordnet, dass die Abgasströme in einer quer zur gedachten Verbindungslinie zwischen den Anschlussstutzen verlaufenden Richtung gegeneinander versetzt sind, so dass beispielsweise ein aus dem ersten Parallelstrang 2 austretender, mit Reduktionsmittel beladener Abgasstrom dem einen Fahrzeugboden (nicht dargestellt) zugewandten Wandbereich 32 und ein aus dem Parallelstrang 3 austretender Abgasstrom einem diametral gegenüberliegenden Wandbereich 33 zugeordnet ist. Die Abgasströme bewegen sich somit aufeinander zu und werden durch eine kurvige, etwa ovale oder runde Querschnittsform des Gehäuses 12 in Rotation versetzt, etwa in Richtung der Pfeile 34 in Fig.2. Bei dieser Rotation erfolgt eine Durchmischung der beiden Abgasstränge und dementsprechend eine Verteilung des Reduktionsmittels innerhalb des Gehäuses 12. Die Mittelachsen 29, 30 der Anschlussstutzen 27 bilden in der Draufsicht gem. Fig. 3 einen gegen die Hauptströmungsrichtung 4 sich öffnenden Winkel α. Ein in das Gehäuse 12 eintretender Abgasstrom weist somit auch eine Komponente in Hauptströmungsrichtung 4 auf.

Der sich an die Anschlussstutzen 27 anschließende und zum SCR-Katalysator 5 führende Gehäusebereich weist eine Engstelle 35 auf. Der in Hauptströmungsrichtung 4 vor der Engstelle 35 angeordnete Wandbereich 36 des Gehäuses 12b verjüngt sich konisch zur Engstelle 35 hin, ist also in Form eines Trichters ausgestaltet. Die Strömungsgeschwindigkeit des im Bereich der Zuströmöffnungen 25,26 in Rotation versetzten Abgases wird aufgrund der Querschnittsverengung des Trichters bis zur Engstelle 35 hin stark erhöht, was eine Gleichverteilung des Reduktionsmittels im Abgasstrom begünstigt. Der sich von der Engstelle 35 weg und zum SCR-Katalysator 5 hin erstreckende Wandbereich 37 ist nach Art eines Diffusors trichterförmig erweitert. Auch diese Ausgestaltung fördert eine gleichmäßige Durchmischung des Abgases mit Reduktionsmittel.

## Patentansprüche

1. Abgasanlage für Dieselfahrzeuge mit einem ersten und einem zweiten, auslassseitig mit einem Motor verbindbaren Parallelstrang (2,3), wobei diese mit ihrem stromabwärts weisenden Enden mit einem SCR-Katalysator (5) verbunden sind, und mit einer Vorrichtung, mit der ein Reduktionsmittel an einer stromaufwärts zum SCR-Katalysator (5) gelegenen Stelle in das Abgas einbringbar ist, wobei nur am ersten Parallelstrang (2) eine Injektionseinrichtung (9) für das Reduktionsmittel vorgesehen ist, und dass dem SCR-Katalysator (5) eine Mischvorrichtung (10) vorgeschaltet ist, in die die Parallelstränge (2,3) münden, und in der eine Vermischung des mit Reduktionsmittel versetzten Abgasstroms des ersten Parallelstrangs (2) mit dem reduktionsmittelfreien Abgasstrom des zweiten Parallelstrangs (3) erfolgt,
**dadurch gekennzeichnet,**
**dass** die Mischvorrichtung (10) ein dem SCR-Katalysator (5) vorgeschaltetes Gehäuse (12) umfasst, in das die Parallelstränge (2,3) derart münden, dass die jeweiligen Abgasströme im Wesentlichen tangential in das Gehäuse eingetragen werden.

2. Abgasanlage nach Anspruch 1,
**dadurch gekennzeichnet,**
**dass** die Parallelstränge (2,3) an sich etwa diametral gegenüberliegenden Stellen in das Gehäuse (12) münden.

3. Abgasanlage nach Anspruch 1 oder 2,
**dadurch gekennzeichnet,**
**dass** das Gehäuse (12) eine zwischen dem Mündungsbereich der Parallelstränge (2,3) und dem SCR-Katalysator (5) angeordnete Engstelle (35) aufweist, deren Querschnittsfläche kleiner ist als die mit Abgas beaufschlagte Stirnfläche des SCR-Katalysators (5).

4. Abgasanlage nach Anspruch 3,
**dadurch gekennzeichnet,**
**dass** das Gehäuse (12) einen sich zur Engstelle (35) hin etwa konusförmig verjüngenden Wandabschnitt (36) aufweist.

## Claims

1. Exhaust system for diesel vehicles, having a first and a second parallel line (2,3) which can be connected at the outlet side to an engine, said parallel lines (2, 3) being connected at their downstream ends to an SCR catalytic converter (5), and having a device by means of which a reducing agent can be introduced into the exhaust gas at a point upstream of the SCR catalytic converter (5), an injection device (9) for the reducing agent being provided only in the first parallel line (2), and a mixing device (10) being connected upstream of the SCR catalytic converter (5), into which mixing device (10) the parallel lines (2, 3) open out and in which mixing device the reducing agent-laden exhaust-gas flow of the first parallel line (2) is mixed with the reducing agent-free exhaust-gas flow of the second parallel line (3),
**characterized**
**in that** the mixing device (10) comprises a housing (12) which is connected upstream of the SCR catalytic converter (5) and into which the parallel lines (2, 3) open out in such a way that the respective exhaust-gas flows are introduced substantially tangentially into the housing.

2. Exhaust system according to Claim 1,
**characterized**
**in that** the parallel lines (2,3) open out into the housing (12) at approximately diametrically opposite points.

3. Exhaust system according to Claim 1 or 2,
**characterized**
**in that** the housing (12) has a constriction (35) arranged between the opening-out region of the parallel lines (2,3) and the SCR catalytic converter (5), the cross-sectional area of which constriction is smaller than that end surface of the SCR catalytic converter (5) which is impinged on with exhaust gas.

4. Exhaust system according to Claim 3,
**characterized**
**in that** the housing (12) has a wall section (36) which tapers approximately conically in the direction of the constriction (35).

## Revendications

1. Installation de gaz d'échappement pour des véhicules diesel, comprenant une première et une deuxième branches (2, 3) en parallèle, pouvant être reliées du côté de la sortie à un moteur, ces branches étant reliées par leurs extrémités tournées vers l'aval à un pot (5) catalytique SCR, et comprenant un dispositif par lequel un agent réducteur peut être introduit dans les gaz d'échappement en un point en amont du pot catalytique (5) SCR, dans laquelle un dispositif (9) d'injection de l'agent réducteur est prévu seulement sur la première branche (2) en parallèle et en ce qu'en amont du pot (5) catalytique SCR est monté un dispositif (10) de mélange dans lequel débouche les branches (2, 3) en parallèle et dans lequel a lieu un mélange du courant de gaz d'échappement mélangé à l'agent réducteur de la première branche (22) en parallèle au courant de gaz d'échappement sans agent réducteur de la deuxième branche 3 en parallèle,
**caractérisée**
**en ce que** le dispositif (10) de mélange comprend une boîte (12) qui est montée en amont du pot (5) catalytique SCR et dans laquelle les branches (2, 3) en parallèle débouchent de façon à ce que les courants de gaz d'échappement respectifs entrent sensiblement tangentiellement dans la boîte.

2. Installation de gaz d'échappement suivant la revendication 1,
**caractérisée**
**en ce que** les branches (2, 3) en parallèle débouchent dans la boîte (12) en des points à peu près opposés diamétralement.

3. Installation de gaz d'échappement suivant la revendication 1 ou 2,
**caractérisée**
**en ce que** la boîte (2, 3) a un point (35) resserré qui est disposé entre la zone d'embouchure des branches (2, 3) en parallèle et le pot (5) catalytique SCR et dont la surface de la section transversale est plus petite que la surface frontale soumise aux gaz d'échappement du pot (5) catalytique SCR.

4. Installation de gaz d'échappement suivant la revendication 3,
**caractérisée**
**en ce que** la boîte (12) a un segment (36) de paroi se rétrécissant à peu près en forme de cône en allant vers le point (35) de rétrécissement.
